# EUROPÄISCHE PATENTSCHRIFT

(11) **EP 1 414 547 B1**
(45) Veröffentlichungstag und Bekanntmachung des Hinweises auf die Patenterteilung: **28.12.2005**
(21) Anmeldenummer: 02738163.1
(22) Anmeldetag: 14.06.2002
(51) Int. Cl.: B01D 46/52

(54) **KASSETTENFILTER**
CASSETTE FILTER
FILTRE A CASSETTES

(30) Priorität: 07.08.2001 DE 10137926
(43) Veröffentlichungstag der Anmeldung: 06.05.2004
(73) Patentinhaber: Carl Freudenberg KG, 69469 Weinheim (DE)
(72) Erfinder: MEIERHÖFER, Michael, 69502 Hemsbach (DE); TAPPER, Renate, 64625 Bensheim (DE); CAESAR, Thomas, 69181 Leimen (DE); KNUST, Heiko, 69514 Laudenbach (DE); SCHMITT, Thorsten, 69469 Weinheim (DE); KUCK, Norbert, 69502 Hemsbach (DE); KAFFENBERGER, Rainer, 64385 Reichelsheim (DE)
(86) Internationale Anmeldenummer: PCT/EP2002/006535
(87) Internationale Veröffentlichungsnummer: WO 2003/013695

(56) Entgegenhaltungen:
- DE-A- 1 776 236
- FR-A- 2 020 770
- US-A- 2 709 489
- US-A- 2 909 237
- US-A- 4 885 015
- US-A- 5 230 799
- PATENT ABSTRACTS OF JAPAN vol. 015, no. 496 (C-0894), 16. Dezember 1991 (1991-12-16) & JP 03 217210 A (SANYO ELECTRIC CO LTD), 25. September 1991 (1991-09-25)
- PATENT ABSTRACTS OF JAPAN vol. 2000, no. 12, 3. Januar 2001 (2001-01-03) & JP 2000 254425 A (EBARA CORP), 19. September 2000 (2000-09-19)

## Beschreibung

Bei Betrieben, in denen Reinlufträume vorhanden sind, werden sehr hohe Anforderungen an die Reinheit der Raumluft gestellt. In den Betriebsstätten ist eine von Staub und Mikroorganismen gereinigte Luft erforderlich, um die gewollte Luftreinheit aufrechtzuerhalten. Neben Filtermatten und Taschenfiltem sind Kassettenfilter eine gängige Bauform von Luftfiltern. Die Kassettenfilter haben ein senkrecht zur Strömungsrichtung ausgerichtetes Faltenpaket mit einem äußeren Rahmen. Faltenpaket und Rahmen werden gegeneinander über ein Dichtmaterial abgedichtet. Die Faltenpakete werden aus zick-zackförmig gefaltetem Filterpapier gebildet. Als Dichtmaterial werden bei Schwebstofffiltern ausschließlich flüssig zu verarbeitende Kunststoffe eingesetzt. Bei Feinfiltern kann als Dichtmaterial auch ein Filtervlies eingelegt werden.

Der äußere Rahmen gibt dem Filter die erforderliche mechanische Stabilität, schützt das Faltenpaket vor Beschädigungen und erlaubt den dicht sitzenden Einbau der Filterelements in eine Aufnahmevorrichtung. Als Rahmenwerkstoff kommen Holz, Metallblech oder Aluminium-Strangpressprofile zur Anwendung. Bei einer Rahmung von Kassettenfiltern mit einer Abdichtung aus flüssig verarbeitetem Kunststoff werden die vier Rahmenteile in senkrechter Position gleichzeitig aneinander gefügt und mit dem Faltenpaket verklebt. Der Vorteil dieser Technik liegt darin, dass keine zusätzlichen Gießformen oder eine besondere Ausformung der Rahmenteile notwendig ist. Nachteilig ist jedoch, dass der für die Abdichtung benutzte Kunststoff nicht vollständig flüssig ist, so dass das Faltenpaket unter Umständen nicht an allen Stellen in den Kunststoff eindringt und somit Undichtigkeiten entstehen können.

Eine andere Möglichkeit für die Herstellung des Kassettenfilters besteht darin, dass ein flüssiges Vergussmittel in eine vorbereitete Gießform, die einer Rahmenseite entspricht, gegeben wird und anschließend das Faltenpaket in die Flüssigkeit gestellt wird. Nach dem Aushärten des Vergussmittels wird der Vorgang für die übrigen Seiten des Faltenpakets wiederholt. Bei dieser Technik dringt das Faltenpaket stets vollständig in den flüssigen Kunststoff ein, so dass Undichtigkeiten von vornherein ausgeschlossen sind. Da hier ein dünnflüssiger Kunststoff vergossen wird, muss entweder das Rahmenteil selbst als Gießform ausgeformt sein oder es sind zusätzliche Hilfsvorrichtung notwendig, die das Verlaufen des Dichtmittels während der Fertigung verhindern. Hier werden beim Fügen beispielsweise zusätzliche Schienen als Gießkanten an das flache Rahmenteil angelegt, die das Wegfließen des Vergussmittels verhindern. Nach dem Aushärten des Vergussmittels werden diese Hilfsvorrichtungen wieder entfernt. Da jedoch vom Markt Kassettenfilter in nahezu beliebigen Abmessungen nachgefragt werden, sind für die Fertigung eines jeden Rahmens gesonderte Einrichtungen erforderlich. Die Variantenvielfalt lässt sich deshalb mit Holzrahmen oder auch mit tiefgezogenen oder gegossenen Rahmenteilen nur sehr kostenintensiv durchführen, da beispielsweise für jede Abmessung ein eigenes Tiefziehwerkzeug benötigt wird.

Die Dokumente JP-A-200254425, JP-A-03217210, US-A-4885015, FR-A-2020770, US-A-2909237 und die DE-A-1776236 offenbaren eine Auswahl von bekannten Filterrahmen, die aus Einzelteilen zusammensteckbar sind, wobei die JP-A-200254425 den nächstliegenden Stand der Technik für die vorliegende Erfindung darstellt.

Der Erfindung liegt deshalb die Aufgabe zugrunde, die Herstellung von Kassettenfiltem, insbesondere deren Rahmung, zu verbessern und eine Möglichkeit zu schaffen, mit der Rahmen mit sehr unterschiedlichen Abmessungen auf einfache Weise gefertigt werden können, die sodann mit dem Faltenpaket zu einem Kassettenfilter zusammensetzbar sind.

Die Lösung der gestellten Aufgabe erfolgt bei einem Kassettenfilter insbesondere einem Fein- oder Schwebstofffilter oder dergleichen aus einem Faltenpaket aus Filtermaterial, das in einem Rahmen eingefügt ist, erfindungsgemäß dadurch, dass der Rahmen aus Profilleisten gleichen Aufbaus und aus die Profilleisten an ihren Endstücken erfassenden Eckverbindungen besteht, wobei die Eckverbinder Endkappen haben, die jeweils paarweise übereinander fügbar sind. Ein solcher Aufbau eines Rahmens ermöglicht alle vier Rahmenteile als Wanne auszuformen, so dass das Faltenpaket rundum mit einem dünnflüssigen Kunststoff voll abdichtend vergossen werden kann. Möglich sind aber auch andere Varianten der Abdichtung, die bei gleichem Rahmenaufbau durchgeführt werden können.

Es ist möglich die Profilleisten in vorgegebener Größe einzeln zu fertigen. Die bevorzugte Herstellung sieht jedoch vor, dass die Profilleisten aus abgelängten Teilstücken eines endlos gefertigten Strangprofils bestehen. Das Strangprofil kann extrudierter Kunststoff oder auch stranggepresstes Aluminium sein. Auf diese Weise können mit einem einzigen Werkzeugsatz Profilleisten festgelegter Breite, aber beliebiger Länge hergestellt werden.

Es ist günstig die Profilleisten im Querschnitt gesehen U-förmig auszubilden und die Ränder der Profilleisten nach innen umzulegen. Hierdurch wird die Verbindung mit den Eckbindern unterstützt, was in Zusammenhang mit der Zeichnung noch näher erläutert wird. An den Böden der Profilleisten wird wenigstens eine längs der Profilleisten ausgerichtete Führungsleiste angebracht, die bevorzugt im Querschnitt eine T-Form aufweist und mit dem unteren Ende des T an die Nutgrund anschließt. Diese T-förmigen Erhebungen unterstützen die Steckverbindung zwischen den Profilleisten und Eckverbindern. Zusätzlich führen die T-förmigen Erhebungen nach dem Aushärten des Vergussmittels zu einer Verkrallung mit dem Bauteil und erhöhen damit die Haftung zwischen Verguss- und Rahmenteil.

Nach der Erfindung sind für einen Rahmen an den sich gegenüberliegenden Seiten des Rahmens jeweils zwei gleiche Eckverbinder vorhanden, die in die Profilleisten einsteckbar ausgebildet sind. Jeder Eckverbinder ist mit einem U-förmigen Absatz versehen, der in die betreffende Profilleiste stimseitig formschlüssig einfügbar ist. Der U-förmige Absatz hat außerdem einen Längsschlitz, welcher die Führungsleiste einfasst. Die Eckverbinder sind außerdem mit Endkappen versehen, die jeweils paarweise übereinander fügbar sind.

Für die Herstellung des Filterrahmens werden zunächst zwei Rahmenteile gebildet, beispielsweise die Ober- und die Unterseite, indem zwei gleichlange Profilleisten an ihren Endstücken mit zwei gleichen Eckverbindern durch Einstecken derselben in die Profilleiste gebildet werden. Außerdem werden die beiden anderen Rahmenteile, die rechte und die linke Seite des Rahmens, durch zwei gleichlange Profilleisten und in deren Enden eingesteckte Eckverbinder versehen, dabei sind diese Eckverbinder mit Endkappen ausgestattet, die über die Eckverbinder der ersten Rahmenteile übergestülpt werden können. Zunächst werden folglich die Ober- und Unterseite des Rahmens mit dem Faltenpaket vergossen und danach die rechte und die linke Rahmenseite vergossen und auf das vorgefertigte Faltenpaket aufgeschoben.

Die seitlichen Außenwände der äußeren Endkappen und die Außenwände der zugehörigen Profilleisten sind zueinander fluchtend ausgerichtet, so dass ein Rahmen entsteht, der mit glatten Außenwänden versehen ist.

Für die Steckverbindung zwischen den Eckverbindern und den Profilleisten sind keine Arretierungen notwendig, da die Teile durch Klemmung fest miteinander verbunden werden können, so dass sie während des Vergieß- und Fügevorgangs nicht auseinander fallen. Sobald das Vergussmittel ausgehärtet ist, verklebt es auch die Einzelteile der Rahmenseiten.

### Kurzbeschreibung der Zeichnung

In der Zeichnung ist ein Ausführungsbeispiel der Erfindung dargestellt.

Es zeigt:
- Fig. 1: eine Profilleiste in der Ansicht schräg von oben,
- Fig. 2: einen inneren Eckverbinder in der Schrägansicht,
- Fig. 3: einen äußeren Eckverbinder, ebenfalls in der Schrägansicht und
- Fig. 4: zwei vorgefertigte Seitenteile aus Profilleisten, versehen mit einem inneren und einem äußeren Eckverbinder.

### Ausführung der Erfindung

Der Aufbau von Kassettenfiltern ist an sich bekannt, so dass in der nachstehenden Figuren nur auf die erfindungsgemäße Ausbildung des Kassettenrahmens eingegangen wird.

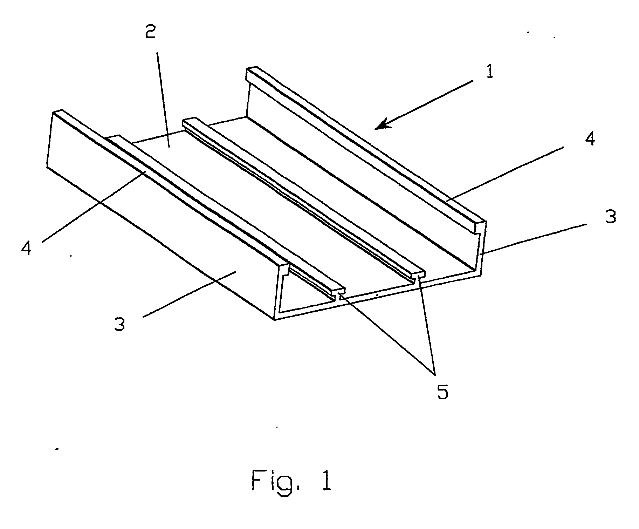

In der Fig. 1 ist die Profilleiste 1 in der perspektivischen Seitenansicht von oben gezeigt. Die Profilleiste 1 ist ein abgelängtes Teilstück aus einem endlos gefertigten Strangprofil. Sie ist, im Querschnitt gesehen, U-förmig ausgebildet und hat die vom Bodengrund 2 nach oben vorstehenden Seitenwände 3. Die Ränder 4 der Seitenwände 3 sind nach innen umgelegt. Am Boden 2 der Profilleisten 1 sind in Längsrichtung die Führungsleisten 5 angebracht, die im Querschnitt eine T-Form haben. Das untere Ende des T ist am Boden 2 angeschlossen.

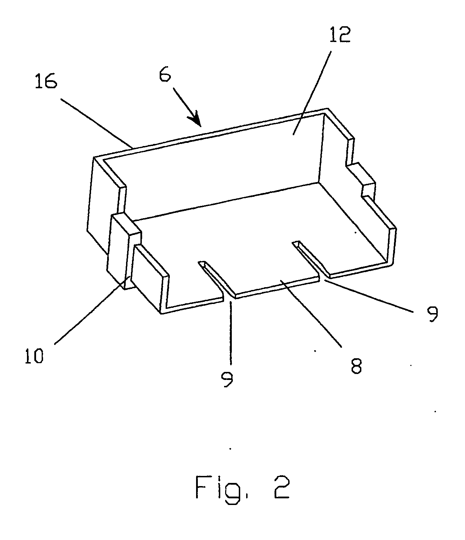

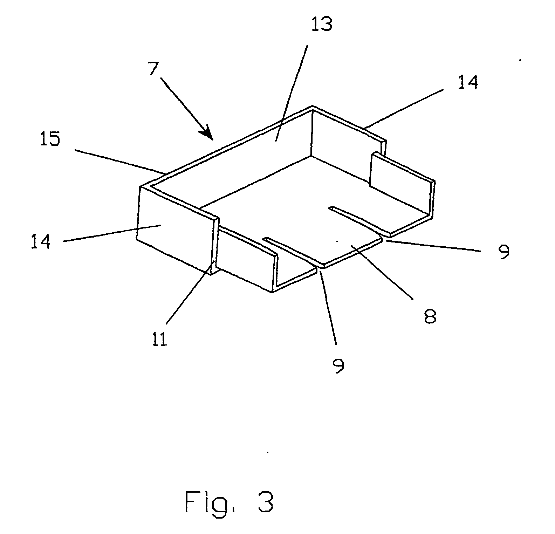

Die Fig. 2 und 3 zeigen jeweils einen Eckverbinder 6 und 7, wobei der Eckverbinder 6 der Fig. 2 den inneren Eckverbinder und den Eckverbinder 7 nach der Fig. 3 den äußeren Eckverbinder darstellt. Die Eckverbinder 6 und 7 werden als Gußteile hergestellt, zum Beispiel aus einem Kunststoffspritzgussteil. Jeder Eckverbinder 6, 7 hat einen U-förmigen Absatz 8, der in die Profilleiste 1 stirnseitig formschlüssig eingesteckt werden kann. Der Absatz 8 ist außerdem mit zwei Längsschlitzen 9 versehen, welche die Führungsleisten 5 einfassen. Die Ausbildung der Profilleisten mit den Führungsleisten 5, den Seitenwänden 3 und den Rändern 4 und die Ausbildung der Eckverbinder 6 und 7 ist so aufeinander abgestimmt, dass durch das Einstecken der Eckverbinder 6 und 7 in die Profilleiste 1 eine formschlüssig sichere Verbindung zwischen denselben hergestellt wird. Die Tiefe des Einsteckvorgangs wird durch die Tiefe der Schlitze 9 bestimmt. Außerdem sind die Eckverbinder 6 und 7 seitlich mit den Anschlagflächen 10 und 11 versehen, mit denen sie an den Seitenwänden 3 der Profilleisten 1 zur Anlage kommen. Die Endkappe 12 des als inneren Eckverbinder bezeichneten Eckverbinders 6 ist in ihren Abmessungen so ausgebildet, dass die Endkappe 13 des äußeren Eckverbinders 7 auf sie aufgesetzt werden kann. Hierfür ist die Endkappe 12 geringfügig kleiner ausgebildet. Die Abmessungen der seitlichen Außenwände 14 der äußeren Endkappen 13 sind so gewählt, dass sie fluchtend mit den Außenwänden 3 der zugehörigen Profilleisten 1 verlaufen. Die Stirnwand 15 der äußeren Endkappe 13 überdeckt vollständig die Stirnwand 16 der inneren Endkappe 6 bei einem vollständig zusammengefügten Rahmen.

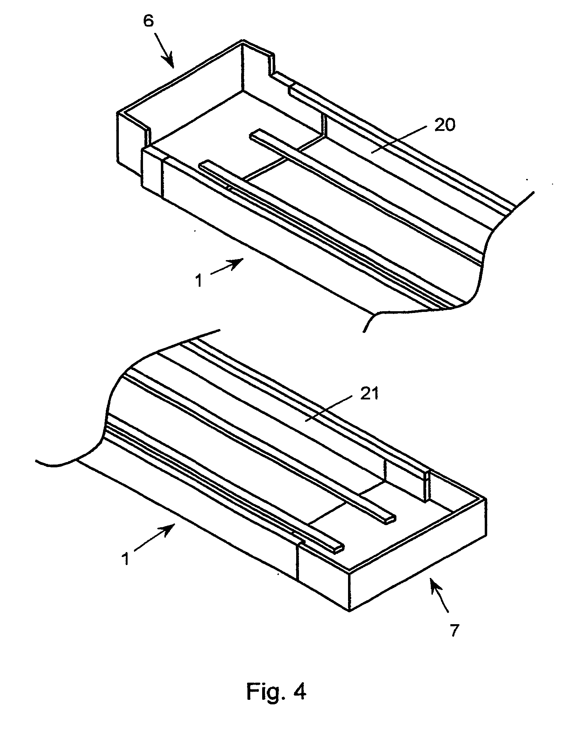

Die Fig. 4 zeigt jeweils zwei Endstücke 20 und 21 von Profilleisten 1, die mit den Eckverbindern 6 und 7 versehen sind. Die Eckverbinder 6 und 7 sind jeweils in die Endstücke 20 und 21 eingesteckt.

## Patentansprüche

1. Kassettenfilter aus einem Rahmen und einem vom Rahmen gehaltenen Fein- oder Schwebstofffilter aus einem Faltenpaket aus Filtermaterial, wobei der Rahmen aus U-förmigen Profilleisten (1) gleichen Aufbaus und aus die Profilleisten (1) an ihren Endstücken (20, 21) erfassenden Eckverbindern (6, 7) besteht, **dadurch gekennzeichnet, dass** an den Böden (2) der Profilleisten (1) wenigstens eine längs der Profilleisten (1) ausgerichtete Führungsleiste (5) vorhanden ist, die im Querschnitt eine T-Form aufweist und mit dem unteren Ende des T am Boden (2) anschließt und dass an den sich gegenüberliegenden Seiten des Rahmens jeweils zwei gleiche Eckverbinder (6, 7) vorhanden sind, die in die Profilleisten (1) einsteckbar ausgebildet sind und die Eckverbinder (6, 7) Endkappen (12, 13) haben, die jeweils paarweise übereinander fügbar sind.

2. Kassettenfilter nach Anspruch 1, **dadurch gekennzeichnet, dass** die Profilleisten (1) aus abgelängten Teilstücken eines endlos gefertigten Strangprofils bestehen.

3. Kassettenfilter nach einem der Ansprüche 1 oder 2, **dadurch gekennzeichnet, dass** die Profilleisten (1) aus extrudiertem Kunststoff bestehen.

4. Kassettenfilter einem der Ansprüche 1 bis 3, **dadurch gekennzeichnet, dass** die Ränder (4) der Seitenwände (3) der Profilleisten (1) nach innen umgelegt sind.

5. Kassettenfilter nach Anspruch 1, **dadurch gekennzeichnet, dass** die Eckverbinder (6, 7) aus Spritz- oder Druckguß bestehen.

6. Kassettenfilter nach einem der Ansprüche 1 bis 5, **dadurch gekennzeichnet, dass** jeder Eckverbinder (6, 7) mit einem U-förmigen Absatz (8) versehen ist, der in die Profilleiste (1) stimseitig formschlüssig einfügbar ist.

7. Kassettenfilter nach Anpruch 6, **dadurch gekennzeichnet, dass** der U-förmige Absatz (8) mit die Führungsleiste (5) einfassenden Längsschlitzen (9) versehen ist.

8. Kassettenfilter nach einem der Ansprüche 1 bis 7, **dadurch gekennzeichnet, dass** die seitlichen Außenwände (14) der äußeren Endkappen (13) und die Außenwände (3) der zugehörigen Profilleisten (1) zueinander fluchtend sind.

## Claims

1. Cartridge filter comprising a frame and a filter for fine or suspended matter held by the frame, comprising a folded package made of filter material, the frame being composed of U-shaped profiled strips (1) of an identical construction and corner connectors (6, 7) engaging the profiled strips (1) at their end pieces (20, 21), **characterized in that** on the bases (2) of the profiled strips (1) there is at least one guide strip (5), which is aligned along the profiled strips (1), is T-shaped in cross section and adjoins the base (2) with the lower end of the T, and **in that** on each of the opposite sides of the frame there are two identical corner connectors (6, 7), which are formed such that they can be inserted into the profiled strips (1) and the corner connectors (6, 7) have end caps (12, 13), which can be joined in pairs one on top of the other.

2. Cartridge filter according to Claim 1, **characterized in that** the profiled strips (1) are composed of pieces cut to length from a continuously produced extruded profile.

3. Cartridge filter according to either of Claims 1 and 2, **characterized in that** the profiled strips (1) consist of extruded plastic.

4. Cartridge filter according to one of Claims 1 to 3, **characterized in that** the edges (4) of the side walls (3) of the profiled strips (1) are bent inwards.

5. Cartridge filter according to Claim 1, **characterized in that** the corner connectors (6, 7) are injection-moulded or diecast.

6. Cartridge filter according to one of Claims 1 to 5, **characterized in that** each corner connector (6, 7) is provided with a U-shaped offset (8), which can be inserted with a form fit into the end of the profiled strips (1).

7. Cartridge filter according to Claim 6, **characterized in that** the U-shaped offset (8) is provided with longitudinal slits (9) engaging the guide strip (5).

8. Cartridge filter according to one of Claims 1 to 7, **characterized in that** the lateral outer walls (14) of the outer end caps (13) and the outer walls (3) of the associated profiled strips (1) are aligned flush with one another.

## Revendications

1. Filtre à cassettes composé d'un cadre et d'un filtre pour matières fines ou en suspension maintenu par le cadre, en un paquet plié de matière de filtre, dans lequel le cadre se compose de lattes profilées en forme de U (1) de même structure et de pièces d'angle (6, 7) coiffant les lattes profilées (1) à leurs parties d'extrémité (20, 21), **caractérisé en ce qu'**il est prévu sur les fonds (2) des lattes profilées (1) au moins une règle de guidage (5) orientée le long des lattes profilées (1), qui présente une section transversale en forme de T et qui se raccorde au fond (2) par l'extrémité inférieure du T, et **en ce qu'**il est prévu sur les côtés du cadre qui se font face chaque fois deux pièces d'angle identiques (6, 7), qui ont une forme pouvant être engagée dans les lattes profilées (1) et les pièces d'angle (6, 7) comportent des coiffes d'extrémité (12, 13), qui peuvent chaque fois être jointes par paires l'une au-dessus de l'autre.

2. Filtre à cassettes selon la revendication 1, **caractérisé en ce que** les lattes profilées (1) se composent de segments coupés à longueur d'un profilé fabriqué en continu par extrusion.

3. Filtre à cassettes selon l'une des revendications 1 ou 2, **caractérisé en ce que** les lattes profilées (1) se composent de matière plastique extrudée.

4. Filtre à cassettes selon l'une quelconque des revendications 1 à 3, **caractérisé en ce que** les bords (4) des parois latérales (3) des lattes profilées (1) sont repliés vers l'intérieur.

5. Filtre à cassettes selon la revendication 1, **caractérisé en ce que** les pièces d'angle (6, 7) sont des pièces moulées par injection ou moulées sous pression.

6. Filtre à cassettes selon l'une quelconque des revendications 1 à 5, **caractérisé en ce que** chaque pièce d'angle (6, 7) est pourvue d'un embout en forme de U (8), qui peut être inséré par emboîtement frontal dans la latte profilée (1).

7. Filtre à cassettes selon la revendication 6, **caractérisé en ce que** l'embout en forme de U (8) est pourvu de fentes longitudinales (9) qui entourent la règle de guidage (5).

8. Filtre à cassettes selon l'une quelconque des revendications 1 à 7, **caractérisé en ce que** les parois extérieures latérales (14) des coiffes d'extrémité extérieures (13) et les parois extérieures (3) des lattes profilées associées (1) sont en alignement les unes avec les autres.
